# EUROPÄISCHE PATENTSCHRIFT

(11) **EP 4 157 683 B1**
(45) Veröffentlichungstag und Bekanntmachung des Hinweises auf die Patenterteilung: **10.12.2025**
(21) Anmeldenummer: 21729448.7
(22) Anmeldetag: 25.05.2021
(51) Int. Cl.: B60T 8/32, B60T 8/172, B60T 8/88

(54) **SENSORANORDNUNG FÜR EIN FAHRZEUG UND MEHRKREISIGES BREMSSYSTEM**
SENSOR ARRANGEMENT FOR A VEHICLE AND A BRAKE SYSTEM COMPRISING SEVERAL CIRCUITS
DISPOSITIF DE CAPTEURS POUR UN VÉHICULE ET UN SYSTÈME DE FREINAGE À PLUSIEURS CIRCUITS

(30) Priorität: 26.05.2020 DE 102020206566
(43) Veröffentlichungstag der Anmeldung: 05.04.2023
(73) Patentinhaber: Robert Bosch GmbH, 70442 Stuttgart (DE)
(72) Erfinder: XIE, Fei, 74376 Gemmrigheim (DE)
(86) Internationale Anmeldenummer: PCT/EP2021/063851
(87) Internationale Veröffentlichungsnummer: WO 2021/239706

(56) Entgegenhaltungen:
- EP-A1- 2 340 975
- EP-A2- 1 227 007
- DE-A1- 10 028 094
- DE-A1- 102018 204 615

## Beschreibung

Die Erfindung betrifft eine Sensoranordnung für ein Fahrzeug, mit mindestens zwei Steuergeräten, welche jeweils mindestens eine Auswerte- und Steuereinheit umfassen, und mehreren Sensorelementen, welche jeweils einem bremsbaren Fahrzeugrad zugeordnet und ausgeführt sind, mindestens eine physikalische Größe des zugeordneten Fahrzeugrads zu erfassen und als Ausgangssignal auszugeben. Die Steuergeräte sind jeweils ausgeführt, basierend auf den erfassten physikalische Größen der Fahrzeugräder mindestens eine Bremsfunktion des Fahrzeugs auszuführen. Gegenstand der Erfindung ist auch ein korrespondierendes mehrkreisiges Bremssystem mit einer solchen Sensoranordnung.

Für hochautomatisiertes bzw. autonomes Fahren und für teilautomatisierte bzw. teilautonome Fahrfunktionen werden typischerweise Redundanzen gefordert, damit die Verfügbarkeit von Sensoren und Funktionen auch in vielen Fehlerfällen gewährleistet ist. Daher kommt typischerweise ein Bremssystem mit einer primären und sekundären Stabilisierung des Fahrzeugs zum Einsatz. Konkret werden zum Bremsen typischerweise zwei unabhängige Bremsgeräte bzw. Bremsregelsysteme eingesetzt. Beide sollten idealerweise Drehzahlinformation von Drehzahlsensoren, welche jeweils einem Fahrzeugrad zugeordnet sind, mit einer hohen Verfügbarkeit bekommen. In heutigen Lösungen werden die Drehzahlsensoren direkt Punkt-zu-Punkt mit einem Primärsteuergerät verbunden. Bei einem Zwei-Box-Systemansatz, wie beispielsweise einem ESP-System als Primärsystem und einem elektromechanischen oder einem anderen elektrischen Bremskraftverstärker als Sekundärsystem bzw. einem integrierten Bremssystem (IPB) als Primärsystem und einem redundanten Bremssystem RBU (RBU: Redundant Brake Unit) als Sekundärsystem, werden die Sensorsignale der Drehzahlsensoren entweder durch das Primärsteuergerät zum Sekundärsteuergerät durchgeschleift, was einen Zusatzaufwand und Kosten erfordert und auch nicht alle Fehlerfälle abdeckt, oder die Drehzahlsensoren werden über eine Umschaltvorrichtung im Fehlerfall zwischen dem Primärsteuergerät und dem Sekundärsteuergerät umgeschaltet. Eine andere bekannte Lösung sieht acht Drehzahlsensoren vor, von denen jeweils vier mit dem Primärsteuergerät und jeweils vier mit dem Sekundärsteuergerät direkt verbunden sind. Durch diese Aufteilung werden an jedem Rad zwei Drehzahlsensoren verbaut, damit die Systeme redundant das Fahrzeug stabilisieren können. Dies bedeutet, dass in Summe acht Drehzahlsensoren pro Fahrzeug und die damit verbundenen doppelten Kosten für Sensoren und Verkabelung aufgewendet werden.

Aus der DE 10 2015 209 565 A1 sind ein Verfahren und eine Vorrichtung zum Betreiben eines Kraftfahrzeugs bekannt. Die Vorrichtung umfasst einen Eingang für jeweils einen externen Drehzahlsensor, eine erste Steuereinrichtung, eine zweite Steuereinrichtung mit einer Drehzahlerfassungseinrichtung für jeden Drehzahlsensor und eine Rechnereinrichtung, mittels der Raddrehzahlen ermittelbar sind. Hierbei sind Drehzahlsignale der Drehzahlerfassungseinrichtungen an die erste Steuereinrichtung und an Ausgänge der Vorrichtung zuführbar, wobei die Drehzahlerfassungsrichtungen voneinander funktional entkoppelt sind, und wobei die zweite Steuereinrichtung funktional von der ersten Steuereinrichtung und von der Rechnereinrichtung entkoppelt ist. Dadurch ist jeder einzelne Kanal eines Drehzahlerfassungssystems redundant und weckfähig ausgebildet. Im Falle, dass die Vorrichtung defekt ist, können Raddrehzahlen noch für andere, an die Ausgänge der Vorrichtung anschließbare Steuergeräte zur Verfügung stehen, beispielsweise zum Ansteuern eines sekundäres Bremssystems. Erreicht wird dies dadurch, dass die Drehzahlerfassungsrichtungen als eine Art Splitter fungieren, die die Drehzahlsignale an mehrere Nutzer verteilen.

Aus der DE 10 2015 110 965 A1 ist ein autonomes Fahrzeugsteuerungssubsystem bekannt, welches ein erstes und ein zweites Bremssteuermodul, welche kommunikativ und elektrisch miteinander verbunden sind, und eine Mehrzahl an Raddrehzahlsensoren umfasst. Hierbei ist eine erste Untermenge der Raddrehzahlsensoren einschließlich wenigstens eines ersten der Raddrehzahlsensoren kommunikativ mit dem ersten Bremssteuermodul und nicht mit dem zweiten Bremssteuermodul verbunden, und eine zweite Untermenge der Raddrehzahlsensoren einschließlich wenigstens eines zweiten der Raddrehzahlsensoren ist kommunikativ mit dem zweiten Bremssteuermodul und nicht mit dem ersten Bremssteuermodul verbunden. Während eines typischen Betriebs des Fahrzeugs und des autonomen Fahrzeugsteuerungssubsystem kommunizieren die Bremssteuermodule miteinander, um Raddrehzahldaten von verschiedenen Sensoren bereitzustellen, wodurch jedes der Bremssteuermodule Operationen zum Steuern von Bremsen des Fahrzeugs vornehmen kann. Tritt jedoch bei einem der Bremssteuermodule ein Fehler, z.B. ein Energieverlust, auf, verfügt das andere Fahrzeugsteuerungssubsystem wenigstens über einige Raddrehzahldaten, d.h. Raddrehzahldaten von wenigstens einem Raddrehzahlsensor.

Aus der DE 100 28 094 A1 ist eine Bremsanlage für ein Fahrzeug, mit zwei Steuergeräten und zwei jeweiligen Spannungsversorgungen bekannt.

Aus der EP 2 340 975 A1 und der EP 1 227 007 A2 ist jeweils eine Bremsanlage für ein Fahrzeug, mit zwei Steuergeräten und einem Datenbus bekannt.

Aus der DE 10 2018 204 615 A1 ist eine Sensoranordnung mit einem Sensorelement und mindestens zwei Steuergeräten bekannt, welche jeweils eine Auswerte- und Steuereinheit und eine Energiequelle aufweisen. Hierbei ist in einem ersten Steuergerät eine erste Auswerte- und Steuereinheit mit einer ersten Energiequelle und in einem zweiten Steuergerät eine zweite Auswerte- und Steuereinheit mit einer zweiten Energiequelle verbunden. Die mindestens zwei Steuergeräte und das Sensorelement sind über mindestens ein separates Verschaltungsmodul miteinander verschaltet. Das jeweilige Verschaltungsmodul verbindet einen ersten Anschluss des zugehörigen Sensorelements mit der ersten Energiequelle und/oder mit der zweiten Energiequelle. Ein zweiter Anschluss des Sensorelements ist mit Masse verbunden, wobei ein durch das Sensorelement fließender Sensorstrom zumindest mit Informationen über eine erfasste Messgröße moduliert ist. Hierbei werten die erste Auswerte- und Steuereinheit und/oder die zweite Auswerte- und Steuereinheit den erfassten Sensorstrom aus. Das Verschaltungsmodul verbindet bei Ausfall der verbundenen Energiequelle jeweils den ersten Anschluss des Sensorelements mit der anderen Energiequelle.

### Offenbarung der Erfindung

Die Sensoranordnung für ein Fahrzeug mit den Merkmalen des unabhängigen Patentanspruchs 1 und das korrespondierende mehrkreisige Bremssystem haben jeweils den Vorteil, dass ein redundantes Sensorelementkonzept mit Standardsensorelementen, welche vorzugsweise als Drehzahlfühler ausgeführt sind, und ohne Umschaltvorrichtung umgesetzt werden kann, bei welchem Kosten für doppelte Drehzahlfühler und Verkabelung eingespart werden können. Zudem können in den beiden Steuergeräten Schaltungsteile eingespart werden. Bei einer bevorzugten Ausführung der Sensoranordnung mit vier Drehzahlfühlern und vier auf zwei Steuergeräte verteilte Auswerte- und Steuereinheiten ist im Fehlerfall in vorteilhafter Weise eine Übergabe bzw. Übernahme der Sensorelemente zwischen den beiden Steuergeräten ohne eine zusätzliche Umschaltvorrichtung und ohne Latenzzeit möglich, da beide Steuergeräte die Ausgangssignale der vier Drehzahlfühler gleichzeitig empfangen und auswerten können.

Ausführungsformen der vorliegenden Erfindung stellen eine Sensoreinheit für ein Fahrzeug, mit mindestens zwei Steuergeräten, welche jeweils mindestens eine Auswerte- und Steuereinheit umfassen, und mehreren Sensorelementen zur Verfügung, welche jeweils einem bremsbaren Fahrzeugrad und nur einer der Auswerte- und Steuereinheiten der Steuergeräte zugeordnet und ausgeführt sind, mindestens eine physikalische Größe des zugeordneten Fahrzeugrads zu erfassen und als Ausgangssignal direkt nur an die zugeordnete Auswerte- und Steuereinheit auszugeben. Die Steuergeräte sind jeweils ausgeführt, basierend auf den erfassten bewegungsabhängigen physikalische Größen der Fahrzeugräder mindestens eine Bremsfunktion des Fahrzeugs auszuführen. Die einzelnen Auswerte- und Steuereinheiten sind ausgeführt, das empfangene Ausgangssignal jeweils an mindestens eine Auswerte- und Steuereinheit eines anderen Steuergeräts auszugeben, so dass die einzelnen Auswerte- und Steuereinheiten jeweils die Ausgangssignale von mindestens zwei Sensorelementen, welche Auswerte- und Steuereinheiten von verschiedenen Steuergeräten zugeordnet sind, empfangen und zur Auswertung aufbereiten.

Zudem wird ein mehrkreisiges Bremssystem, insbesondere für ein hochautomatisiertes oder autonomes Fahrzeug, mit mehreren Radbremsen, welche jeweils an einem Fahrzeugrad angeordnet sind, einer solchen Sensoranordnung, welche mindestens eine physikalische Größe der Fahrzeugräder erfasst, einem Primärsteuergerät, welches basierend auf der erfassten mindestens einen physikalische Größe der Fahrzeugräder mindestens eine Bremsfunktion des Fahrzeugs ausführt, und einem Sekundärsteuergerät vorgeschlagen, welches basierend auf der erfassten mindestens einen physikalische Größe der Fahrzeugräder mindestens eine Bremsfunktion des Fahrzeugs ausführt.

Unter dem Steuergerät bzw. dem Primärsteuergerät oder dem Sekundärsteuergerät kann vorliegend ein elektrisches Gerät verstanden werden, welches erfasste Sensorsignale verarbeitet bzw. auswertet. Hierzu kann das Steuergerät zumindest eine Auswerte- und Steuereinheit zum Empfangen und Aufbereiten bzw. Verarbeiten von elektrischen Ausgangssignalen, mindestens eine Recheneinheit zum Auswerten der aufbereiteten Ausgangssignale, zumindest eine Speichereinheit zum Speichern von Signalen oder Daten, zumindest eine Schnittstelle zu einem Sensorelement zum Einlesen von Ausgangssignalen oder zu einem Aktor zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Vorliegend sind die Aktoren beispielsweise als Magnetventile oder als Druckerzeuger ausgeführt, welche vom Steuergerät entsprechend angesteuert werden können. Die mindestens eine Schnittstelle kann hard- und/oder softwaremäßig ausgebildet sein. Bei einer hardwaremäßigen Ausbildung können die Schnittstellen beispielsweise Teil eines sogenannten Systemschaltkreises sein, der verschiedenste Funktionen des Steuergeräts beinhaltet. Ein solcher Systemschaltkreis ist vorzugsweise als anwendungsspezifische integrierte Schaltung (ASIC) ausgeführt. So kann beispielsweise die mindestens eine Auswerte- und Steuereinheit als ASIC ausgeführt werden. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung der Auswertung verwendet wird, wenn das Programm von der Recheneinheit ausgeführt wird. Die beiden Steuergeräte können in Verbindung mit einer Primäraktuatorik bzw. mit einer Sekundäraktuatorik verschiedene Bremsfunktionen, wie beispielsweise ABS-, ESP-, ASR- und/oder Hillhold-Funktionen (ABS: Antiblockiersystem, ESP: Elektronisches Stabilitätsprogramm, ASR: Antriebsschlupfregelung) ausführen. Hierbei können die beiden Steuergeräte im Normalbetrieb verschiedene Bremsfunktionen ausführen. Bei einem Ausfall eines der beiden Steuergeräte kann vorgesehen werden, dass das andere Steuergerät die Bremsfunktionen des ausgefallenen Steuergeräts zumindest teilweise übernimmt, um eine entsprechende Rückfallebene auszubilden.

Unter der Primäraktuatorik bzw. Sekundäraktuatorik kann vorliegend eine hydraulische und/oder elektromechanische Baugruppe verstanden werden, über welche im Bremssystem für den Druckaufbau bzw. Druckabbau in den Radbremsen entsprechende Steuer- und/oder Regelvorgänge für eine ABS-Funktion (ABS: Antiblockiersystem) oder eine ASR-Funktion (ASR: Antriebsschlupfregelung) oder ein elektronisches Stabilitätsprogramm (ESP) oder für eine automatische Parkbremsfunktion durchgeführt werden können. Zur Durchführung der Steuer- und/oder Regelvorgänge umfasst die Primäraktuatorik bzw. die Sekundäraktuatorik mindestens einen Bremsdruckerzeuger und eine Hydraulikventileinheit mit Magnetventilen, welche aufgrund der gegensätzlich wirkenden Kräfte "Magnetkraft", "Federkraft" und "Hydraulikkraft" meist in eindeutigen Positionen gehalten werden können. Dementsprechend gibt es die Magnetventilarten "stromlos offen" und "stromlos geschlossen". Zudem werden auch bistabile Magnetventile eingesetzt, welche zwischen einem "stromlos offenen" und einem "stromlos geschlossenen" Zustand umgeschaltet werden können, wobei ein solches bistabiles Magnetventil dauerhaft bis zum nächsten Umschaltsignal im jeweiligen Betriebszustand verbleibt. Der Bremsdruckerzeuger ist insbesondere muskelkraft-, hilfskraft- und/oder fremdkraftbetätigbar. "Hilfskraft" bedeutet eine Betätigung mit Muskelkraft unterstützt durch einen Bremskraftverstärker. Zur Durchführung der Parkbremsfunktion kann an den Fahrzeugrädern von mindestens einer Fahrzeugachse, vorzugsweise der Hinterachse, jeweils ein elektro-mechanischer Aktuator angeordnet sein, welcher über korrespondierende Ansteuersignale aktiviert bzw. deaktiviert werden kann.

Unter einem Sensorelement kann vorliegend ein elektrisches Bauteil verstanden werden, welches im Bereich eines zugeordneten Fahrzeugrads eine physikalische Größe bzw. eine Änderung einer physikalischen Größe direkt oder indirekt erfasst und vorzugsweise in ein elektrisches Ausgangssignal umwandelt. Vorzugsweise kann ein solches Sensorelement als Drehzahlfühler ausgeführt werden, wobei eine korrespondierende Drehzahlinformation vorzugsweise durch das Abtasten eines magnetischen Encoders oder eines ferromagnetischen Zahnrads ermittelt werden kann. Der magnetische Encoder ist beispielsweise als Messwertgeberring mit mehreren gleichmäßig über seinen Umfang verteilt angeordneten Magnetelementen, insbesondere Permanentmagnete, ausgebildet, welche eine abwechselnde magnetische Orientierung aufweisen und ein Magnetpolpaar bilden. Mittels des Drehzahlsensors werden die Magnetfelder der Magnetelemente bei einer Rotation des Messwertgeberrings erfasst, wobei in Abhängigkeit des magnetischen Flusses des jeweiligen erfassten Magnetfelds einer Auswerte- und Steuereinheit ein Ausgabestrom mittels einer Stromschnittstelle zur weiteren Verwendung als Drehzahlinformation zur Verfügung gestellt wird. Die Drehzahlfühler können beispielsweise ein Hall-, GMR-, AMR- oder TMR-Sensorelement umfassen (GMR: Giant Magnetoresistance oder Riesenmagnetowiderstand, AMR: Anisotrope Magnetoresistance oder anisotroper Magnetowiderstand, TMR: Tunnel Magnetoresistance oder magnetischer Tunnelwiderstand). Hierbei kann der jeweilige Drehzahlfühler sein Ausgangssignal als Datenprotokoll, wie beispielsweise als AK-Protokoll oder I-Protokoll, über die Stromschnittstelle an die korrespondierende Auswerte- und Steuereinheit übertragen. Zur Ermittlung der Drehzahlinformationen erfassen die Drehzahlfühler beispielsweise Magnetpolpaarnulldurchgänge, wobei bei jedem Magnetpolpaarnulldurchgang, d.h. einem Vorzeichenwechsel der erfassten Magnetfeldstärke, ein sogenannter "Speed-Puls" erzeugt wird, welcher die eigentliche Drehzahlinformation repräsentiert. Das AK-Protokoll umfasst den "Speed-Puls" als Drehzahlinformation und mindestens eine zusätzliche Drehzahlinformation als Datenwort mit mehrere Protokollbits. Die Protokollbits definieren den Dateninhalt der mindestens einen zusätzlichen Drehzahlinformation. Die mindestens eine zusätzliche Drehzahlinformation betrifft beispielsweise eine Drehrichtungsinformation, eine Luftspaltinformation, eine Temperaturinformation, eine Druckinformation usw.

Unter der Auswerte- und Steuereinheit kann vorliegend eine elektrische Schaltung, vorzugsweise eine anwendungsspezifische integrierte Schaltung (ASIC), verstanden werden, welche Ausgangssignale von Sensorelementen empfängt und ausgibt oder aufbereitet bzw. verarbeitet und als aufbereitete Ausgangssignale ausgibt. So kann ein durch das jeweilige Sensorelement fließender Sensorstrom mit Informationen über eine erfasste Messgröße moduliert werden und an die zugeordnete Auswerte- und Steuereinheit übertragen und dort in ein Spannungssignal umgewandelt werden, welches die korrespondierende Messinformation repräsentiert. Zudem können die einzelnen Auswerte- und Steuereinheiten beispielsweise den die eigentliche Messinformation repräsentierenden "Speed-Puls" als Spannungssignal jeweils über eine Punkt-zu-Punkt-Verbindung der mindestens einen Auswerte- und Steuereinheit in einem anderen Steuergerät in Echtzeit zur Verfügung stellen. Die Auswerte- und Steuereinheit kann mehrere Schnittstellen aufweisen, welche als Teil der Auswerte- und Steuereinheit ausgeführt sind. Es ist jedoch auch möglich, dass die Schnittstellen eigene, integrierte Schaltkreise sind oder zumindest teilweise aus diskreten Bauelementen bestehen.

Durch die in den abhängigen Ansprüchen aufgeführten Maßnahmen und Weiterbildungen sind vorteilhafte Verbesserungen der im unabhängigen Patentanspruch 1 angegebenen Sensoranordnung für ein Fahrzeug möglich.

Besonders vorteilhaft ist, dass die Steuergeräte jeweils mindestens eine Recheneinheit umfassen können. Hierbei können die einzelnen Auswerte- und Steuereinheiten aufbereitete Ausgangssignale an die mindestens eine Recheneinheit des korrespondierenden Steuergeräts übertragen. Des Weiteren können die aufbereiteten Ausgangssignale zusätzliche Messinformationen, wie beispielsweise eine Drehrichtungsinformation, eine Luftspaltinformation, eine Temperaturinformation, eine Druckinformation usw., umfassen, und von den einzelnen Auswerte- und Steuereinheiten an die korrespondierende Recheneinheit übertragen werden. Die einzelnen Recheneinheiten können die aufbereiteten Ausgangssignale zur Ausführung der korrespondierenden mindestens einen Bremsfunktion des Fahrzeugs auswerten.

In vorteilhafter Ausgestaltung der Sensoranordnung kann die mindestens eine physikalische Größe eine bewegungsabhängige Messgröße und/oder eine andere Messgröße des korrespondierenden Fahrzeugrads repräsentieren. Die bewegungsabhängige Messgröße kann beispielsweise eine Drehzahl und/oder Drehgeschwindigkeit und/oder eine Drehrichtung repräsentieren. Die mindestens eine andere Messgröße des korrespondierenden Fahrzeugrads kann beispielsweise eine Temperatur und/oder einen Reifendruck repräsentieren.

In weiterer vorteilhafter Ausgestaltung der Sensoranordnung können die Recheneinheiten basierend auf den aufbereiteten Ausgangssignalen jeweils Messdaten der einzelnen Fahrzeugräder erzeugen und einem Datenbus zur Verteilung im Fahrzeug zur Verfügung stellen. Bei dem Datenbus kann es sich beispielsweise um ein CAN-Bussystem oder ein Ethernet oder um ein Flexray handeln. Selbstverständlich können auch andere geeignete Netzwerke oder eine Kombination der genannten Netzwerke im Fahrzeug zur Verteilung der Messdaten eingesetzt werden.

In weiterer vorteilhafter Ausgestaltung der Sensoranordnung können die einzelnen Sensorelemente jeweils als Standarddrehzahlfühler ausgeführt sein. Dies ermöglicht eine besonders kostengünstige Implementierung der erfindungsgemäßen Sensoranordnung.

In weiterer vorteilhafter Ausgestaltung der Sensoranordnung können ein erstes Steuergerät der mindestens zwei Steuergeräte und ein zweites Steuergerät der mindestens zwei Steuergeräte jeweils zwei Auswerte- und Steuereinheiten umfassen. Hierbei kann jeweils eine erste Auswerte- und Steuereinheit der beiden Steuergeräte den Fahrzeugrädern einer ersten Fahrzeugachse zugeordnet sein. Zudem kann jeweils eine zweite Auswerte- und Steuereinheit der beiden Steuergeräte den Fahrzeugrädern einer zweiten Fahrzeugachse zugeordnet sein. Des Weiteren können die den Fahrzeugrädern der ersten Fahrzeugachse zugeordneten ersten Auswerte- und Steuereinheiten der beiden Steuergeräte und die den Fahrzeugrädern der zweiten Fahrzeugachse zugeordneten zweiten Auswerte- und Steuereinheiten der beiden Steuergeräte jeweils die empfangenen Ausgangssignale der zugeordneten Sensorelemente miteinander austauschen.

In weiterer vorteilhafter Ausgestaltung der Sensoranordnung können die Auswerte- und Steuereinheiten der beiden Steuergeräte die empfangenen Ausgangssignale der zugeordneten Sensorelemente jeweils an mindestens ein weiteres Steuergerät übertragen.

In weiterer vorteilhafter Ausgestaltung der Sensoranordnung können die Steuergeräte jeweils eine redundante Energieversorgung aufweisen. Dadurch können die Auswertung und Übertragung der Ausgangssignale und die zugehörigen Fahrzeugfunktionen auch bei Ausfall einer der Energieversorgungen durchgeführt werden.

In weiterer vorteilhafter Ausgestaltung der Sensoranordnung kann das erste Steuergerät als Primärsteuergerät ausgeführt sein und ein ESP-System oder ein ESP-System mit einer vakuumunabhängigen elektrohydraulischen Bremskraftverstärkung ansteuern. Das zweite Steuergerät kann als Sekundärsteuergerät ausgeführt sein und einen vakuumunabhängigen elektrohydraulischen Bremskraftverstärker oder eine redundante Bremseinheit ansteuern. Das mindestens eine weitere Steuergerät kann ein Antriebssteuergerät, welches ausgeführt ist, einen Inverter eines elektrischen Antriebs des Fahrzeugs anzusteuern, oder ein Zentralsteuergerät sein, welches ausgeführt ist, Bewegungstrajektorien zu berechnen.

Bei Ausführungsformen der Sensoranordnung und des mehrkreisigen Bremssystems mit einer solchen Sensoranordnung stehen im Fehlerfall bei einem Ausfall einer der Auswerte- und Steuereinheiten immer noch die Ausgangssignale und die aufbereiteten Ausgangssignale von drei Sensorelementen in beiden Steuergeräten zur Auswertung zur Verfügung. Bei einem Ausfall einer der Recheneinheiten in einem der Steuergeräte stehen die Ausgangssignale und die aufbereiteten Ausgangssignale der vier Sensorelemente immer noch im anderen der beiden Steuergeräte zur Auswertung zur Verfügung. Bei Ausfall eines der vier Sensorelemente stehen die Ausgangssignale und die aufbereiteten Ausgangssignale der drei anderen Sensorelemente in beiden Steuergeräten weiter zur Auswertung zur Verfügung.

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

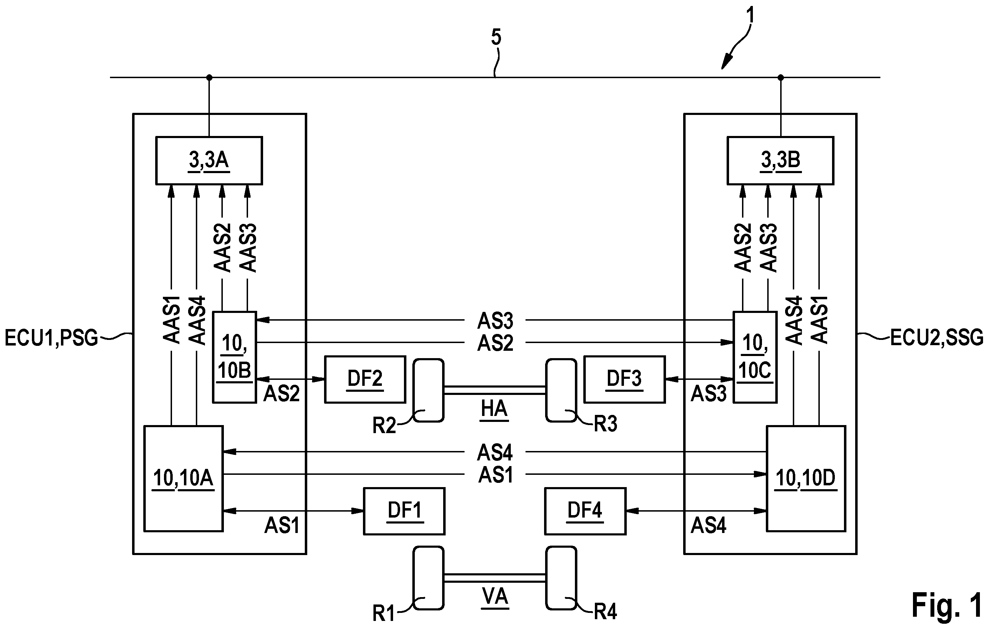

Fig. 1 zeigt eine schematisches Blockdiagramm eines Ausführungsbeispiels einer erfindungsgemäßen Sensoranordnung für ein Fahrzeug.

### Ausführungsformen der Erfindung

Wie aus Fig. 1 ersichtlich ist, umfasst das dargestellte Ausführungsbeispiel einer erfindungsgemäßen Sensoranordnung 1 für ein Fahrzeug mindestens zwei Steuergeräte ECU1, ECU2, welche jeweils mindestens eine Auswerte- und Steuereinheit 10, 10A, 10B, 10C, 10D umfassen, und mehrere Sensorelemente DF1, DF2, DF3, DF4, welche jeweils einem bremsbaren Fahrzeugrad R1, R2, R3, R4 und nur einer der Auswerte- und Steuereinheiten 10A, 10B, 10C, 10D der Steuergeräte ECU1, ECU2 zugeordnet und ausgeführt sind, mindestens eine physikalische Größe des zugeordneten Fahrzeugrads R1, R2, R3, R4 zu erfassen und als Ausgangssignal AS1, AS2, AS3, AS4 direkt nur an die zugeordnete Auswerte- und Steuereinheit 10A, 10B, 10C, 10D auszugeben. Die Steuergeräte ECU1, ECU2 führen basierend auf den erfassten bewegungsabhängigen physikalischen Größen der Fahrzeugräder R1, R2, R3, R4 mindestens eine Bremsfunktion des Fahrzeugs 1 aus. Die einzelnen Auswerte- und Steuereinheiten 10A, 10B, 10C, 10D geben das empfangene Ausgangssignal AS1, AS2, AS3, AS4 jeweils an mindestens eine Auswerte- und Steuereinheit 10A, 10B, 10C, 10D eines anderen Steuergeräts ECU1, ECU2 aus, so dass die einzelnen Auswerte- und Steuereinheiten 10A, 10B, 10C, 10D jeweils die Ausgangssignale AS1, AS2, AS3, AS4 von mindestens zwei Sensorelementen DF1, DF2, DF3, DF4, welche Auswerte- und Steuereinheiten 10A, 10B, 10C, 10D von verschiedenen Steuergeräten ECU1, ECU2 zugeordnet sind, empfangen und zur Auswertung aufbereiten.

Wie aus Fig. 1 weiter ersichtlich ist, umfasst die Sensoranordnung 1 im dargestellten Ausführungsbeispiel zwei Steuergeräte ECU1, ECU2 und vier als Standarddrehzahlfühler ausgeführte Sensorelemente DF1, DF2, DF3, DF4. Hierbei ist ein erstes Sensorelement DF1 einem ersten Fahrzeugrad R1 einer ersten Fahrzeugachse VA, hier der Vorderachse, und einer ersten Auswerte- und Steuereinheit 10A eines ersten Steuergeräts ECU1 zugeordnet. Ein zweites Sensorelement DF2 ist einem ersten Fahrzeugrad R2 einer zweiten Fahrzeugachse HA, hier der Hinterachse, und einer zweiten Auswerte- und Steuereinheit 10B des ersten Steuergeräts ECU1 zugeordnet. Ein drittes Sensorelement DF3 ist einem zweiten Fahrzeugrad R3 der zweiten Fahrzeugachse HA und einer zweiten Auswerte- und Steuereinheit 10C eines zweiten Steuergeräts ECU2 zugeordnet. Ein viertes Sensorelement DF4 ist einem zweiten Fahrzeugrad R4 der ersten Fahrzeugachse VA und einer ersten Auswerte- und Steuereinheit 10D des zweiten Steuergeräts ECU2 zugeordnet. Somit sind im dargestellten Ausführungsbeispiel die ersten Auswerte- und Steuereinheiten 10A, 10D der beiden Steuergeräte ECU1, ECU2 den Fahrzeugrädern R1, R4 der ersten Fahrzeugachse VA zugeordnet und die zweiten Auswerte- und Steuereinheiten 10B, 10C der beiden Steuergeräte ECU1, ECU2 sind den Fahrzeugrädern R2, R3 der zweiten Fahrzeugachse HA zugeordnet.

Wie aus Fig. 1 weiter ersichtlich ist, umfassen die beiden Steuergeräte ECU1, ECU2 im dargestellten Ausführungsbeispiel jeweils eine Recheneinheit 3, 3A, 3B, wobei das erste Steuergerät ECU1 eine erste Recheneinheit 3A und das zweite Steuergerät ECU2 eine zweite Recheneinheit 3B umfasst. Zudem weisen die beiden Steuergeräte ECU1, ECU2 jeweils eine nicht dargestellte redundante Energieversorgung auf.

Wie aus Fig. 1 weiter ersichtlich ist, überträgt die erste Auswerte- und Steuereinheit 10A des ersten Steuergeräts ECU1 das empfangene Ausgangssignal AS1 des ersten Sensorelements DF1 an die erste Auswerte- und Steuereinheit 10D des zweiten Steuergeräts ECU2, und die erste Auswerte- und Steuereinheit 10D des zweiten Steuergeräts ECU2 überträgt das empfangene Ausgangssignal AS4 des vierten Sensorelements DF4 an die erste Auswerte- und Steuereinheit 10A des ersten Steuergeräts ECU1. Somit empfangen die ersten Auswerte- und Steuereinheiten 10A, 10D der beiden Steuergeräte ECU1, ECU2 jeweils die Ausgangssignale AS1, AS4 des ersten Sensorelements DF1 und des vierten Sensorelements DF4, welche den Fahrzeugrädern R1, R4 der ersten Fahrzeugachse VA zugeordnet sind. Des Weiteren bereiten beide Auswerte- und Steuereinheiten 10A, 10D die Ausgangssignale AS1, AS4 des ersten Sensorelements DF1 und des vierten Sensorelements DF4 auf, wobei die erste Auswerte- und Steuereinheit 10A des ersten Steuergeräts ECU1 die aufbereiteten Ausgangssignale AAS1, AAS4 an die erste Recheneinheit 3A des ersten Steuergeräts ECU1 zur Auswertung überträgt. Die erste Auswerte- und Steuereinheit 10D des zweiten Steuergeräts ECU2 überträgt die aufbereiteten Ausgangssignale AAS1, AAS4 an die zweite Recheneinheit 3B des zweiten Steuergeräts ECU2 zur Auswertung.

Wie aus Fig. 1 weiter ersichtlich ist, überträgt die zweite Auswerte- und Steuereinheit 10B des ersten Steuergeräts ECU1 das empfangene Ausgangssignal AS2 des zweiten Sensorelements DF2 an die zweite Auswerte- und Steuereinheit 10C des zweiten Steuergeräts ECU2, und die zweite Auswerte- und Steuereinheit 10C des zweiten Steuergeräts ECU2 überträgt das empfangene Ausgangssignal AS3 des dritten Sensorelements DF3 an die zweite Auswerte- und Steuereinheit 10B des ersten Steuergeräts ECU1. Somit empfangen die zweiten Auswerte- und Steuereinheiten 10B, 10C der beiden Steuergeräte ECU1, ECU2 jeweils die Ausgangssignale AS2, AS3 des zweiten Sensorelements DF2 und des dritten Sensorelements DF3, welche den Fahrzeugrädern R2, R3 der zweiten Fahrzeugachse HA zugeordnet sind. Des Weiteren bereiten beide Auswerte- und Steuereinheiten 10B, 10C die Ausgangssignale AS2, AS3 des zweiten Sensorelements DF2 und des dritten Sensorelements DF3 auf, wobei die zweite Auswerte- und Steuereinheit 10B des ersten Steuergeräts ECU1 die aufbereiteten Ausgangssignale AAS2, AAS3 an die erste Recheneinheit 3A des ersten Steuergeräts ECU1 zur Auswertung überträgt. Die zweite Auswerte- und Steuereinheit 10C des zweiten Steuergeräts ECU2 überträgt die aufbereiteten Ausgangssignale AAS2, AAS3 an die zweite Recheneinheit 3B des zweiten Steuergeräts ECU2 zur Auswertung. Die beiden Recheneinheiten 3A, 3B werten die aufbereiteten Ausgangssignale AAS1, AAS2, AAS3, AAS4 zur Ausführung der korrespondierenden mindestens einen Bremsfunktion des Fahrzeugs aus.

Selbstverständlich ist auch ein anderer als der dargestellte Austausch der empfangenen Ausgangssignale AS1, AS3; AS2, AS4 der zugeordneten Sensorelemente DF1, DF2, DF3, DF4 möglich. Zudem können die empfangenen Ausgangssignale AS1, AS3; AS2, AS4 der zugeordneten Sensorelemente DF1, DF2, DF3, DF4 bei einem alternativen nicht dargestellten Ausführungsbeispiel der Sensoranordnung 1 zusätzlich auch an mindestens ein weiteres nicht dargestelltes Steuergerät übertragen werden. Das mindestens eine weitere Steuergerät ist beispielsweise ein Antriebssteuergerät, welches ausgeführt ist, einen Inverter eines elektrischen Antriebs des Fahrzeugs 1 anzusteuern, oder ein Zentralsteuergerät, welches ausgeführt ist, Bewegungstrajektorien zu berechnen.

Die Sensorelemente DF1, DF2, DF3, DF4 erfassen jeweils mindestens eine physikalische Größe, welche eine bewegungsabhängige Messgröße und/oder eine andere Messgröße des korrespondierenden Fahrzeugrads R1, R2, R3, R4 repräsentiert. Im dargestellten Ausführungsbeispiel repräsentiert die mindestens eine bewegungsabhängige Messgröße eine Drehzahl und eine Drehrichtung. Selbstverständlich kann die erfasste physikalische Größe auch eine andere bewegungsabhängige Messgröße, wie beispielsweise eine Drehgeschwindigkeit repräsentieren. Die mindestens eine andere Messgröße des korrespondierenden Fahrzeugrads R1, R2, R3, R4 repräsentiert im dargestellten Ausführungsbeispiel eine Temperatur im Umfeld des Sensorelements DF1, DF2, DF3, DF4. Selbstverständlich kann die erfasste physikalische Größe auch eine andere Messgröße, wie beispielsweise einen Reifendruck oder eine Luftspaltinformation repräsentieren.

Im dargestellten Ausführungsbeispiel der Sensoranordnung 1 erzeugten die Recheneinheiten 3A, 3B basierend auf den aufbereiteten Ausgangssignalen AAS1, AAS2, AAS3, AAS4 jeweils Messdaten der einzelnen Fahrzeugräder R1, R2, R3, R4 und stellen diesem einem Datenbus 5 zur Verteilung im Fahrzeug zur Verfügung.

Das beschriebene Ausführungsbeispiel der erfindungsgemäßen Sensoranordnung 1 für ein Fahrzeug, welches mindestens eine physikalische Größe der Fahrzeugräder R1, R2, R3, R4 erfasst, wird vorzugsweise in einem mehrkreisigen Bremssystem, insbesondere für ein hochautomatisiertes oder autonomes Fahrzeug eingesetzt. Ein solches mehrkreisiges Bremssystem umfasst mehrere nicht dargestellte Radbremsen, welche jeweils an einem Fahrzeugrad R1, R2, R3, R4 angeordnet sind, ein Primärsteuergerät PSG, welches basierend auf der erfassten mindestens einen physikalische Größe der Fahrzeugräder R1, R2, R3, R4 mindestens eine Bremsfunktion des Fahrzeugs ausführt, und ein Sekundärsteuergerät SSG, welches basierend auf der erfassten mindestens einen physikalische Größe der Fahrzeugräder R1, R2, R3, R4 mindestens eine Bremsfunktion des Fahrzeugs ausführt. Hierbei ist das erste Steuergerät ECU1 als Primärsteuergerät PSG ausgeführt und das zweite Steuergerät ECU2 ist als Sekundärsteuergerät SSG ausgeführt.

Hierbei kann das Primärsteuergerät PSG ein ESP-System oder ein ESP-System mit einer vakuumunabhängigen elektrohydraulischen Bremskraftverstärkung oder ein integriertes Bremssystem (IPB) ansteuern. Das Sekundärsteuergerät SSG kann einen vakuumunabhängigen elektrohydraulischen Bremskraftverstärker oder eine redundante Bremseinheit ansteuern.

Das Primärsteuergerät PSG und das Sekundärsteuergerät SSG empfangen die Ausgangssignale AS1, AS3; AS2, AS4 der zugeordneten Sensorelemente DF1, DF2, DF3, DF4 in Echtzeit zur weiteren Auswertung und zur Ausführung der korrespondierenden Bremsfunktionen bzw. zur Ausführung der primären Stabilisierung des Fahrzeugs oder der sekundären Stabilisierung des Fahrzeugs im Notfall, wenn die primäre Stabilisierung ausgefallen ist. Zur Ausführung der korrespondierenden Bremsfunktionen und der primären Stabilisierung des Fahrzeugs steuert das Primärsteuergerät PSG eine entsprechende nicht näher dargestellte an sich bekannte Primäraktuatorik an, über welche im Bremssystem ein Druckaufbau bzw. Druckabbau in den Radbremsen durchgeführt und entsprechende Steuer- und/oder Regelvorgänge ausgeführt werden können. Zur Ausführung der korrespondierenden Bremsfunktionen und der sekundären Stabilisierung des Fahrzeugs steuert das Sekundärsteuergerät SSG eine entsprechende nicht näher dargestellte an sich bekannte Sekundäraktuatorik an, über welche im Bremssystem ein Druckaufbau bzw. Druckabbau in den Radbremsen durchgeführt und entsprechende Steuer- und/oder Regelvorgänge ausgeführt werden können. Zur Ausführung einer Parkbremsfunktion ist mindestens eines der beiden Steuergeräte ECU1, ECU2 über eine elektrische Verbindung mit einem korrespondierenden nicht näher dargestellten Aktuator einer elektrischen Parkbremse elektrisch verbunden. Vorzugsweise sind die Aktuatoren der Parkbremsfunktion an den Fahrzeugrädern R2, R3 der zweite Fahrzeugachse HA bzw. der Hinterachse angeordnet. In einem alternativen nicht dargestellten Ausführungsbeispiel der Sensoranordnung 1 sind die Aktuatoren der elektrischen Parkbremse zusätzlich oder alternativ an den Fahrzeugrädern R1, R4 der ersten Fahrzeugachse VA bzw. der Vorderachse angeordnet.

## Patentansprüche

1. Sensoranordnung (1) für ein Fahrzeug, mit mindestens zwei Steuergeräten (ECU1, ECU2), welche jeweils mindestens eine Auswerte- und Steuereinheit (10, 10A, 10B, 10C, 10D) umfassen, und mehreren Sensorelementen (DF1, DF2, DF3, DF4), welche jeweils einem bremsbaren Fahrzeugrad (R1, R2, R3, R4) zugeordnet und ausgeführt sind, mindestens eine physikalische Größe des zugeordneten Fahrzeugrads (R1, R2, R3, R4) zu erfassen und als Ausgangssignal (AS1, AS2, AS3, AS4) auszugeben, wobei die Steuergeräte (ECU1, ECU2) jeweils ausgeführt sind, basierend auf den erfassten physikalische Größen der Fahrzeugräder (R1, R2, R3, R4) mindestens eine Bremsfunktion des Fahrzeugs (1) auszuführen, **dadurch gekennzeichnet, dass** die mehreren Sensorelemente (DF1, DF2, DF3, DF4) jeweils **nur** einer der Auswerte- und Steuereinheiten (10A, 10B, 10C, 10D) der mindestens zwei Steuergeräte (ECU1, ECU2) zugeordnet und jeweils ausgeführt sind, die Ausgangssignale (AS1, AS2, AS3, AS4) **nur** direkt an die zugeordnete Auswerte- und Steuereinheit (10A, 10B, 10C, 10D) auszugeben, wobei die einzelnen Auswerte- und Steuereinheiten (10A, 10B, 10C, 10D) ausgeführt sind, das empfangene Ausgangssignal (AS1, AS2, AS3, AS4) jeweils an mindestens eine Auswerte- und Steuereinheit (10A, 10B, 10C, 10D) eines anderen Steuergeräts (ECU1, ECU2) auszugeben, so dass die einzelnen Auswerte- und Steuereinheiten (10A, 10B, 10C, 10D) jeweils die Ausgangssignale (AS1, AS2, AS3, AS4) von mindestens zwei Sensorelementen (DF1, DF2, DF3, DF4), welche Auswerte- und Steuereinheiten (10A, 10B, 10C, 10D) von verschiedenen Steuergeräten (ECU1, ECU2) zugeordnet sind, empfangen und zur Auswertung aufbereiten.

2. Sensoranordnung (1) nach Anspruch 1, **dadurch gekennzeichnet, dass** die Steuergeräte (ECU1, ECU2) jeweils mindestens eine Recheneinheit (3, 3A, 3B) umfassen, wobei die einzelnen Auswerte- und Steuereinheiten (10A, 10B, 10C, 10D) weiter ausgeführt sind, aufbereitete Ausgangssignale (AAS1, AAS2, AAS3, AAS4) an die mindestens eine Recheneinheit (3, 3A, 3B) des korrespondierenden Steuergeräts (ECU1, ECU2) zu übertragen, und wobei die einzelnen Recheneinheiten (3A, 3B) ausgeführt sind, die aufbereiteten Ausgangssignale (AAS1, AAS2, AAS3, AAS4) zur Ausführung der korrespondierenden mindestens einen Bremsfunktion des Fahrzeugs auszuwerten.

3. Sensoranordnung (1) nach Anspruch 1 oder 2, **dadurch gekennzeichnet, dass** die mindestens eine physikalische Größe eine bewegungsabhängige Messgröße und/oder eine andere Messgröße des korrespondierenden Fahrzeugrads (R1, R2, R3, R4) repräsentiert.

4. Sensoranordnung (1) nach Anspruch 3, **dadurch gekennzeichnet, dass** die mindestens eine bewegungsabhängige Messgröße eine Drehzahl und/oder Drehgeschwindigkeit und/oder eine Drehrichtung repräsentiert.

5. Sensoranordnung (1) nach einem der Ansprüche 2 bis 4, **dadurch gekennzeichnet, dass** die Recheneinheiten (3, 3A, 3B) basierend auf den aufbereiteten Ausgangssignalen (AAS1, AAS2, AAS3, AAS4) jeweils Messdaten der einzelnen Fahrzeugräder (R1, R2, R3, R4) erzeugen und einem Datenbus (5) zur Verteilung im Fahrzeug zur Verfügung stellen.

6. Sensoranordnung (1) nach einem der Ansprüche 1 bis 5, **dadurch gekennzeichnet, dass** die einzelnen Sensorelemente (DF1, DF2, DF3, DF4) jeweils als Standarddrehzahlfühler ausgeführt sind.

7. Sensoranordnung (1) nach einem der Ansprüche 1 bis 6, **dadurch gekennzeichnet, dass** ein erstes Steuergerät (ECU1) der mindestens zwei Steuergeräte (ECU1, ECU2) und ein zweites Steuergerät (ECU2) der mindestens zwei Steuergeräte (ECU1, ECU2) jeweils zwei Auswerte- und Steuereinheiten (10A, 10B, 10C, 10D) umfassen.

8. Sensoranordnung (1) nach Anspruch 7, **dadurch gekennzeichnet, dass** jeweils eine erste Auswerte- und Steuereinheit (10A, 10D) der beiden Steuergeräte (ECU1, ECU2) den Fahrzeugrädern (R1, R4) einer ersten Fahrzeugachse (VA) zugeordnet sind, und jeweils eine zweite Auswerte- und Steuereinheit (10B, 10C) der beiden Steuergeräte (ECU1, ECU2) den Fahrzeugrädern (R2, R3) einer zweiten Fahrzeugachse (HA) zugeordnet sind.

9. Sensoranordnung (10) nach Anspruch 8, **dadurch gekennzeichnet, dass** die den Fahrzeugrädern (R1, R4) der ersten Fahrzeugachse (VA) zugeordneten ersten Auswerte- und Steuereinheiten (10A, 10D) der beiden Steuergeräte (ECU1, ECU2) und die den Fahrzeugrädern (R2, R4) der zweiten Fahrzeugachse (HA) zugeordneten zweiten Auswerte- und Steuereinheiten (10B, 10C) der beiden Steuergeräte (ECU1, ECU2) jeweils die empfangenen Ausgangssignale (AS1, AS3; AS2, AS4) der zugeordneten Sensorelemente (DF1, DF2, DF3, DF4) miteinander austauschen.

10. Sensoranordnung (1) nach einem der Ansprüche 7 bis 9, **dadurch gekennzeichnet, dass** die Auswerte- und Steuereinheiten (10A, 10B, 10C, 10D) der beiden Steuergeräte (ECU1, ECU2) die empfangenen Ausgangssignale (AS1, AS3; AS2, AS4) der zugeordneten Sensorelemente (DF1, DF2, DF3, DF4) jeweils an mindestens ein weiteres Steuergerät übertragen.

11. Sensoranordnung (1) nach einem der Ansprüche 1 bis 10, **dadurch gekennzeichnet, dass** die Steuergeräte (ECU1, ECU2) jeweils eine redundante Energieversorgung aufweisen.

12. Sensoranordnung (1) nach einem der Ansprüche 1 bis 11, **dadurch gekennzeichnet, dass** das erste Steuergerät (ECU1) als Primärsteuergerät (PSG) ausgeführt ist und ein ESP-System oder ein ESP-System mit einer vakuumunabhängigen elektrohydraulischen Bremskraftverstärkung ansteuert.

13. Sensoranordnung (1) nach einem der Ansprüche 1 bis 12, **dadurch gekennzeichnet, dass** das zweite Steuergerät (ECU2) als Sekundärsteuergerät (SSG) ausgeführt ist und einen vakuumunabhängigen elektrohydraulischen Bremskraftverstärker oder eine redundante Bremseinheit ansteuert.

14. Sensoranordnung (1) nach einem der Ansprüche 10 bis 13, **dadurch gekennzeichnet, dass** das mindestens eine weitere Steuergerät ein Antriebssteuergerät ist, welches ausgeführt ist, einen Inverter eines elektrischen Antriebs des Fahrzeugs (1) anzusteuern, oder ein Zentralsteuergerät ist, welches ausgeführt ist, Bewegungstrajektorien zu berechnen.

15. Mehrkreisiges Bremssystem, insbesondere für ein hochautomatisiertes oder autonomes Fahrzeug, mit mehreren Radbremsen, welche jeweils an einem Fahrzeugrad (R1, R2, R3, R4) angeordnet sind, einer Sensoranordnung (1), welche mindestens eine physikalische Größe der Fahrzeugräder (R1, R2, R3, R4) erfasst, einem Primärsteuergerät (PSG), welches basierend auf der erfassten mindestens einen physikalische Größe der Fahrzeugräder (R1, R2, R3, R4) mindestens eine Bremsfunktion des Fahrzeugs ausführt, und einem Sekundärsteuergerät (SSG), welches basierend auf der erfassten mindestens einen physikalische Größe der Fahrzeugräder (R1, R2, R3, R4) mindestens eine Bremsfunktion des Fahrzeugs ausführt, **dadurch gekennzeichnet, dass** die Sensoranordnung (1) nach einem der Ansprüche 1 bis 14 ausgeführt ist.

## Claims

1. Sensor arrangement (1) for a vehicle, having at least two control units (ECU1, ECU2), each of which comprises at least one evaluation and control unit (10, 10A, 10B, 10C, 10D), and multiple sensor elements (DF1, DF2, DF3, DF4), each of which is assigned to a brakeable vehicle wheel (R1, R2, R3, R4) and designed to measure at least one physical quantity of the associated vehicle wheel (R1, R2, R3, R4) and to output said physical quantity as an output signal (AS1, AS2, AS3, AS4), each of the control units (ECU1, ECU2) being designed to take the measured physical quantities of the vehicle wheels (R1, R2, R3, R4) as a basis for performing at least one braking function of the vehicle (1), **characterized in that** each of the multiple sensor elements (DF1, DF2, DF3, DF4) is assigned to only one of the evaluation and control units (10A, 10B, 10C, 10D) of the at least two control units (ECU1, ECU2) and designed to output the output signals (AS1, AS2, AS3, AS4) only directly to the associated evaluation and control unit (10A, 10B, 10C, 10D), each of the individual evaluation and control units (10A, 10B, 10C, 10D) being designed to output the received output signal (AS1, AS2, AS3, AS4) to at least one evaluation and control unit (10A, 10B, 10C, 10D) of another control unit (ECU1, ECU2) so that each of the individual evaluation and control units (10A, 10B, 10C, 10D) receives the output signals (AS1, AS2, AS3, AS4) from at least two sensor elements (DF1, DF2, DF3, DF4) associated with evaluation and control units (10A, 10B, 10C, 10D) of different control units (ECU1, ECU2) and prepares said output signals for evaluation.

2. Sensor arrangement (1) according to Claim 1, **characterized in that** each of the control units (ECU1, ECU2) comprises at least one computing unit (3, 3A, 3B), the individual evaluation and control units (10A, 10B, 10C, 10D) also being designed to transmit processed output signals (AAS1, AAS2, AAS3, AAS4) to the at least one computing unit (3, 3A, 3B) of the corresponding control unit (ECU1, ECU2), and the individual computing units (3A, 3B) being designed to evaluate the processed output signals (AAS1, AAS2, AAS3, AAS4) for performing the corresponding at least one braking function of the vehicle.

3. Sensor arrangement (1) according to Claim 1 or 2, **characterized in that** the at least one physical quantity represents a motion-dependent measured quantity and/or another measured quantity of the corresponding vehicle wheel (R1, R2, R3, R4).

4. Sensor arrangement (1) according to Claim 3, **characterized in that** the at least one motion-dependent measured quantity represents a speed and/or rotational speed and/or a direction of rotation.

5. Sensor arrangement (1) according to one of Claims 2 to 4, **characterized in that** each of the computing units (3, 3A, 3B) takes the processed output signals (AAS1, AAS2, AAS3, AAS4) as a basis for producing measurement data of the individual vehicle wheels (R1, R2, R3, R4) and makes said measurement data available to a data bus (5) for distribution in the vehicle.

6. Sensor arrangement (1) according to one of Claims 1 to 5, **characterized in that** each of the individual sensor elements (DF1, DF2, DF3, DF4) is a standard speed sensor.

7. Sensor arrangement (1) according to one of Claims 1 to 6, **characterized in that** each of a first control unit (ECU1) of the at least two control units (ECU1, ECU2) and a second control unit (ECU2) of the at least two control units (ECU1, ECU2) comprises two evaluation and control units (10A, 10B, 10C, 10D).

8. Sensor arrangement (1) according to Claim 7, **characterized in that** a first evaluation and control unit (10A, 10D) of each of the two control units (ECU1, ECU2) is assigned to the vehicle wheels (R1, R4) of a first vehicle axle (VA), and a second evaluation and control unit (10B, 10C) of each of the two control units (ECU1, ECU2) is assigned to the vehicle wheels (R2, R3) of a second vehicle axle (HA).

9. Sensor arrangement (10) according to Claim 8, **characterized in that** each of the first evaluation and control units (10A, 10D) of the two control units (ECU1, ECU2), which are assigned to the vehicle wheels (R1, R4) of the first vehicle axle (VA), and the second evaluation and control units (10B, 10C) of the two control units (ECU1, ECU2), which are assigned to the vehicle wheels (R2, R4) of the second vehicle axle (HA), exchanges the received output signals (AS1, AS3; AS2, AS4) of the associated sensor elements (DF1, DF2, DF3, DF4) with the other.

10. Sensor arrangement (1) according to one of Claims 7 to 9, **characterized in that** each of the evaluation and control units (10A, 10B, 10C, 10D) of the two control units (ECU1, ECU2) transmits the received output signals (AS1, AS3; AS2, AS4) of the associated sensor elements (DF1, DF2, DF3, DF4) to at least one other control unit.

11. Sensor arrangement (1) according to one of Claims 1 to 10, **characterized in that** each of the control units (ECU1, ECU2) has a redundant power supply.

12. Sensor arrangement (1) according to one of Claims 1 to 11, **characterized in that** the first control unit (ECU1) is a primary control unit (PSG) and controls an ESP system or an ESP system with a vacuum-independent electro-hydraulic brake booster.

13. Sensor arrangement (1) according to one of Claims 1 to 12, **characterized in that** the second control unit (ECU2) is a secondary control unit (SSG) and controls a vacuum-independent electro-hydraulic brake booster or a redundant braking unit.

14. Sensor arrangement (1) according to one of Claims 10 to 13, **characterized in that** the at least one other control unit is a drive control unit designed to control an inverter of an electric drive of the vehicle (1), or a central control unit designed to calculate motion trajectories.

15. Multi-circuit braking system, in particular for a highly automated or autonomous vehicle, having multiple wheel brakes, each of which is arranged on a vehicle wheel (R1, R2, R3, R4), a sensor arrangement (1), which measures at least one physical quantity of the vehicle wheels (R1, R2, R3, R4), a primary control unit (PSG), which takes the measured at least one physical quantity of the vehicle wheels (R1, R2, R3, R4) as a basis for performing at least one braking function of the vehicle, and a secondary control unit (SSG), which takes the measured at least one physical quantity of the vehicle wheels (R1, R2, R3, R4) as a basis for performing at least one braking function of the vehicle, **characterized in that** the sensor arrangement (1) is designed according to one of Claims 1 to 14.

## Revendications

1. Ensemble capteur (1) pour un véhicule, comprenant au moins deux appareils de commande (ECU1, ECU2) qui comprennent respectivement au moins une unité d'évaluation et de commande (10, 10A, 10B, 10C, 10D), et de multiples éléments capteurs (DF1, DF2, DF3, DF4) qui sont respectivement associés à une roue de véhicule (R1, R2, R3, R4) pouvant être freinée et conçus pour détecter au moins une grandeur physique de la roue de véhicule (R1, R2, R3, R4) associée et pour la délivrer en tant que signal de sortie (AS1, AS2, AS3, AS4), les appareils de commande (ECU1, ECU2) étant respectivement conçus pour exécuter au moins une fonction de freinage du véhicule (1) sur la base des grandeurs physiques détectées des roues de véhicule (R1, R2, R3, R4), **caractérisé en ce que** les multiples éléments capteurs (DF1, DF2, DF3, DF4) sont respectivement associés à une seule des unités d'évaluation et de commande (10A, 10B, 10C, 10D) des au moins deux appareils de commande (ECU1, ECU2) et sont respectivement conçus pour ne délivrer les signaux de sortie (AS1, AS2, AS3, AS4) que directement à l'unité d'évaluation et de commande (10A, 10B, 10C, 10D) associée, les unités d'évaluation et de commande (10A, 10B, 10C, 10D) individuelles étant conçues pour délivrer le signal de sortie reçu respectif (AS1, AS2, AS3, AS4) à au moins une unité d'évaluation et de commande (10A, 10B, 10C, 10D) d'un autre appareil de commande (ECU1, ECU2), de telle sorte que les unités d'évaluation et de commande (10A, 10B, 10C, 10D) individuelles reçoivent respectivement les signaux de sortie (AS1, AS2, AS3, AS4) d'au moins deux éléments capteurs (DF1, DF2, DF3, DF4), lesquels sont associés à des unités d'évaluation et de commande (10A, 10B, 10C, 10D) de différents appareils de commande (ECU1, ECU2), et les traitent pour l'évaluation.

2. Ensemble capteur (1) selon la revendication 1, **caractérisé en ce que** les appareils de commande (ECU1, ECU2) comprennent respectivement au moins une unité de calcul (3, 3A, 3B), les unités d'évaluation et de commande (10A, 10B, 10C, 10D) individuelles étant en outre conçues pour transmettre des signaux de sortie traités (AAS1, AAS2, AAS3, AAS4) à ladite au moins une unité de calcul (3, 3A, 3B) de l'appareil de commande (ECU1, ECU2) correspondant, et les unités de calcul (3A, 3B) individuelles étant conçues pour évaluer les signaux de sortie traités (AAS1, AAS2, AAS3, AAS4) pour exécuter ladite au moins une fonction de freinage correspondante du véhicule.

3. Ensemble capteur (1) selon la revendication 1 ou 2, **caractérisé en ce que** ladite au moins une grandeur physique représente une grandeur de mesure dépendant du mouvement et/ou une autre grandeur de mesure de la roue de véhicule (R1, R2, R3, R4) correspondante.

4. Ensemble capteur (1) selon la revendication 3, **caractérisé en ce que** ladite au moins une grandeur de mesure dépendant du mouvement représente un nombre de tours et/ou une vitesse de rotation et/ou une direction de rotation.

5. Ensemble capteur (1) selon l'une des revendications 2 à 4, **caractérisé en ce que** les unités de calcul (3, 3A, 3B) génèrent respectivement, sur la base des signaux de sortie traités (AAS1, AAS2, AAS3, AAS4), des données de mesure des roues de véhicule (R1, R2, R3, R4) individuelles et les fournissent à un bus de données (5) pour les distribuer dans le véhicule.

6. Ensemble capteur (1) selon l'une des revendications 1 à 5, **caractérisé en ce que** les éléments capteurs individuels (DF1, DF2, DF3, DF4) sont respectivement conçus sous forme de capteurs de vitesse de rotation standard.

7. Ensemble capteur (1) selon l'une des revendications 1 à 6, **caractérisé en ce qu'**un premier appareil de commande (ECU1) des au moins deux appareils de commande (ECU1, ECU2) et un deuxième appareil de commande (ECU2) des au moins deux appareils de commande (ECU1, ECU2) comprennent respectivement deux unités d'évaluation et de commande (10A, 10B, 10C, 10D).

8. Ensemble capteur (1) selon la revendication 7, **caractérisé en ce qu'**une première unité d'évaluation et de commande respective (10A, 10D) des deux appareils de commande (ECU1, ECU2) est associée aux roues de véhicule (R1, R4) d'un premier essieu de véhicule (VA), et **en ce qu'**une deuxième unité d'évaluation et de commande respective (10B, 10C) des deux appareils de commande (ECU1, ECU2) est associée aux roues de véhicule (R2, R3) d'un deuxième essieu de véhicule (HA).

9. Ensemble capteur (10) selon la revendication 8, **caractérisé en ce que** les premières unités d'évaluation et de commande (10A, 10D) des deux appareils de commande (ECU1, ECU2), qui sont associées aux roues de véhicule (R1, R4) du premier essieu de véhicule (VA), et les deuxièmes unités d'évaluation et de commande (10B, 10C) des deux appareils de commande (ECU1, ECU2), qui sont associées aux roues de véhicule (R2, R4) du deuxième essieu de véhicule (HA), échangent respectivement entre elles les signaux de sortie reçus (AS1, AS3 ; AS2, AS4) des éléments capteurs (DF1, DF2, DF3, DF4) associés.

10. Ensemble capteur (1) selon l'une des revendications 7 à 9, **caractérisé en ce que** les unités d'évaluation et de commande (10A, 10B, 10C, 10D) des deux appareils de commande (ECU1, ECU2) transmettent respectivement à au moins un autre appareil de commande les signaux de sortie reçus (AS1, AS3 ; AS2, AS4) des éléments capteurs (DF1, DF2, DF3, DF4) associés.

11. Ensemble capteur (1) selon l'une des revendications 1 à 10, **caractérisé en ce que** les appareils de commande (ECU1, ECU2) comportent respectivement une alimentation en énergie redondante.

12. Ensemble capteur (1) selon l'une des revendications 1 à 11, **caractérisé en ce que** le premier appareil de commande (ECU1) est conçu sous la forme d'un appareil de commande primaire (PSG) et commande un système ESP ou un système ESP doté d'un servofrein électrohydraulique indépendant du vide.

13. Ensemble capteur (1) selon l'une des revendications 1 à 12, **caractérisé en ce que** le deuxième appareil de commande (ECU2) est conçu sous la forme d'un appareil de commande secondaire (SSG) et commande un servofrein électrohydraulique indépendant du vide ou une unité de freinage redondante.

14. Ensemble capteur (1) selon l'une des revendications 10 à 13, **caractérisé en ce que** ledit au moins un autre appareil de commande est un appareil de commande d'entraînement qui est conçu pour commander un inverseur d'un entraînement électrique du véhicule (1), ou est un appareil de commande central qui est conçu pour calculer des trajectoires de déplacement.

15. Système de freinage à plusieurs circuits, notamment destiné à un véhicule hautement automatisé ou autonome, comprenant de multiples freins de roue, qui sont respectivement disposés sur une roue de véhicule (R1, R2, R3, R4), un ensemble capteur (1) qui détecte au moins une grandeur physique des roues de véhicule (R1, R2, R3, R4), un appareil de commande primaire (PSG) qui exécute au moins une fonction de freinage du véhicule sur la base de ladite au moins une grandeur physique détectée des roues de véhicule (R1, R2, R3, R4), et un appareil de commande secondaire (SSG) qui exécute au moins une fonction de freinage du véhicule sur la base de ladite au moins une grandeur physique détectée des roues de véhicule (R1, R2, R3, R4), **caractérisé en ce que** l'ensemble capteur (1) est réalisé selon l'une des revendications 1 à 14.
